# EUROPÄISCHE PATENTANMELDUNG

(11) **EP 0 631 159 A1**
(43) Veröffentlichungstag der Anmeldung: **28.12.1994**
(21) Anmeldenummer: 94108803.1
(22) Anmeldetag: 08.06.1994
(51) Int. Cl.: G02B 6/30

(54) **Anordnung zur optischen Kopplung eines planaren optischen Wellenleiters und einer optischen Faser und Verfahren zur Herstellung eines für eine solche Anordnung geeigneten planaren Wellenleiters**

(30) Priorität: 18.06.1993 DE 4320249
(71) Anmelder: SIEMENS AKTIENGESELLSCHAFT, D-80333 München (DE)
(72) Erfinder: Schneider, Hartmut, Dr., D-81927 München (DE)

(57) **Zusammenfassung**

Anordnung zur optischen Kopplung eines planaren optischen Wellenleiters und einer optischen Faser und Verfahren zur Herstellung eines für eine solche Anordnung geeigneten planaren Wellenleiters.

Eine bekannte Anordnung zur optischen Kopplung eines auf einem Substrat integrierten planaren optischen Wellenleiters und einer optischen Faser weist eine zu einer Stirnfläche des Wellenleiters führende grabenartige Vertiefung (Nut) im Substrat auf, in der die Faser befestigt wird. Diese Vertiefung muß sehr genau hergestellt werden. Es soll eine derartige Anordnung bereitgestellt werden, bei der die Vertiefung nicht sehr genau bemessen werden muß.

Dazu wird die Faser (3) auf einem gesonderten Halteteil (7) zwischen zwei in einer gemeinsamen Ebene (89) liegenden planen Flächen (8,9) befestigt und mit diesen Flächen (8,9) auf in einer gemeinsamen Ebene liegenden planen Flächen des Substrats, zwischen denen die grabenartige Vertiefung ausgebildet ist, aufgelegt. Die Faser (3) ist dann mit Spiel in der ausreichend groß bemessenen Vertiefung angeordnet.

Anwendung bei bidirektionalen optischen Sende- und Empfangsmodulen.

## Beschreibung

Eine Anordnung der genannten Art ist aus der EP 0 361 153 A2 (GR 88 P 1674 DE) bekannt. Bei dieser bekannten Anordnung bildet die grabenartige Vertiefung in der Trägerfläche des Substrats einen Führungskanal für die Faser, in welchem die Faser spielfrei und fest gehaltert ist und der aus diesem Grunde vorab sehr genau in Bezug auf den planaren Wellenleiter, insbesondere dessen Längsachse justiert sein muß. Dazu muß die Lage des planaren Wellenleiters bzw. dessen Längsachse sowohl vertikal als auch lateral in Bezug auf die Trägerfläche des Substrats genau bekannt sein. Darüberhinaus muß der Führungskanal genau in Bezug auf die Faser bemessen sein.

Der planare Wellenleiter besteht aus einer auf der Trägerfläche des Substrats aufgebrachten ersten Schicht aus einem Material einer ersten Brechzahl, einer auf dieser ersten Schicht angeordneten streifenförmigen zweiten Schicht mit Längsachse und aus einem Material mit einer im Vergleich zur ersten Brechzahl höheren Brechzahl und aus einer die streifenförmige zweite Schicht abdeckenden dritten Schicht aus einem Material mit einer im Vergleich zur zweiten Brechzahl kleineren Brechzahl. Die streifenförmige zweite Schicht bildet den Kern und die erste und dritte Schicht den Mantel des planaren Wellenleiters.

Bei der bekannten Anordnung bestehen das Substrat, die erste Schicht und die dritte Schicht beispielsweise aus InP und die streifenförmige zweite Schicht aus quaternärem Material, beispielsweise aus InGaAsP.

Aus C.H. Henry, G.E. Blonder, R.F. Kazarinov, J. Lightwave Technol. 7 1530-1539 (1989) ist bekannt, daß optische Schaltungen zur Verteilung, zum Empfang, zum Senden oder zur Verstärkung von optischen Signalen in der optischen Nachrichtentechnik vielfach in dotiertem Quarzglas (SiO₂) auf Substraten aus Si, beispielsweise Si-Scheiben, in Planartechnik ausgeführt werden.

Ein dem planaren Wellenleiter gemäß der DE-OS ähnlicher planarer Wellenleiter aus dotiertem Quarzglas auf einem Substrat aus Si ist beispielsweise aus H.W. Schneider, Mat. Res. Soc. Symp. Proc. Vol. 244, 337-342 bekannt. Dieser Wellenleiter weist eine auf der Trägerfläche des Substrats aus Si aufgebrachte erste Schicht aus mit B₂O₃ dotiertem SiO₂, eine auf dieser ersten Schicht angeordnete streifenförmige zweite Schicht aus mit B₂O₃ und TiO₂ dotiertem SiO₂ und eine die streifenförmige zweite Schicht abdeckende dritte Schicht aus mit B₂O₃ dotiertem SiO₂ auf.

Die Herstellung dieses planaren Wellenleiters aus dotiertem Quarzglas kann gemäß H.W. Schneider, Mat. Res. Soc. Symp. Proc. Vol. 244, 337-342 so erfolgen, daß auf der Trägerfläche des Substrats aus Si eine erste Schicht aus mit B₂O₃ dotiertem SiO2 und auf dieser ersten Schicht die zweite Schicht aus mit B₂O₃ und TiO₂ dotiertem SiO₂ abgeschieden wird. Auf der Oberfläche der zweiten Schicht werden ein oder mehrere im Abstand voneinander angeordnete Streifen aus einer Maskenschicht aus amorphem Silizium erzeugt. Mittels eines reaktiven Ionenätzverfahrens mit einem Ätzmittel, welches das Material der zweiten Schicht, nicht aber das amorphe Silizium angreift, wird die zweite Schicht außerhalb der Streifen abgeätzt, so daß auf der ersten Schicht ein oder mehrere streifenartige erhabene Stege der zweiten Schicht übrigbleiben, die mit amorphem Silizium bedeckt sind. Das amorphe Silizium wird entfernt und der oder die verbleibenden erhabenen Stege aus dem Material der zweiten Schicht werden durch Abscheidung der dritten Schicht aus dem mit B₂O₃ dotierten SiO₂ abgedeckt. Wie beim planaren Wellenleiter nach der DE-OS 38 88 147 bildet jeder Steg einen Kern und die erste und dritte Schicht den Mantel eines planaren Wellenleiters, dessen Längsachse durch die Längsachse seines streifenartigen Steges aus dem Material der zweiten Schicht definiert ist.

Die drei bei diesem Verfahren erzeugten dotierten Quarzglasschichten weisen herstellungsbedingt Dickentoleranzen von bis zu 0,5 µm auf, so daß die vertikale Position des Kerns des planaren Wellenleiters über der Trägerfläche des Substrats bzw. unter der Oberfläche der dritten Schicht schlecht definiert ist. Auch ist die seitliche Lage des Kerns in Richtung parallel zur Trägerfläche und senkrecht zur Längsachse zunächst ebenfalls unbekannt.

Der Erfindung liegt die Aufgabe zugrunde, eine Anordnung der eingangs genannten Art bereitzustellen, bei welcher es auf eine genaue Justage der grabenartigen Vertiefung in der Trägerfläche des Substrats in Bezug auf die Längsachse des planaren Wellenleiters und/oder auf eine genaue Bemessung dieser Vertiefung in Bezug auf die Faser nicht ankommt.

Diese Aufgabe wird durch die im kennzeichnenden Teil des Patentanspruchs 1 angegebenen Merkmale gelöst.

Die Erfindung hat den Vorteil, daß die grabenartige Vertiefung nur grob auf die Längsachse des planaren Wellenleiters justiert werden muß und in Bezug auf die Faser so groß bemessen sein kann, daß die Faser mit einem Spiel in dieser Vertiefung angeordnet ist, wenn die Längsachsen von Faser und planarem Wellenleiter in Bezug auf die gemeinsame Ebene der planen Flächen des Substrats auf gleicher Höhe liegen, insbesondere wenn diese Längsachsen fluchten.

Die gleiche Höhe der Längsachsen kann durch die planen Flächen des Substrats und des Halteteils erreicht werden, wenn diese Flächen in Bezug auf die Längsachsen von Wellenleiter und Faser vorab so festgelegt werden, daß bei den aufeinanderliegenden planen Flächen von Substrat und Halteteil die Längsachsen von selbst auf der gleichen Höhe liegen.

Wenn das Substrat und das Halteteil mit der darauf befestigten Faser entsprechend zusammengebracht werden, so daß die planen Flächen des Substrats und die planen Flächen des Halteteils aufeinanderliegen und die Faser zwischen den planen Flächen mit Spiel in der grabenförmigen Vertiefung und mit ihrer der Stirnfläche des Wellenleiters zugekehrten Stirnfläche angeordnet ist, sind die Längsachsen bereits vertikal in Bezug auf die Trägerfläche des Substrats justiert. Es ist dann nur noch eine Justierung parallel zur Trägerfläche des Substrats und senkrecht zur Längsachse des planaren Wellenleiters vorzunehmen.

Diese Justierung kann durch eine aktive Justage, bei der die optische Kopplung unter Überwachung des Lichtdurchgangs durch die Koppelstelle zwischen Faser und Wellenleiter optimiert wird, vorgenommen werden. Diese aktive Kopplung ist jedoch wenig fertigungsfreundlich und sollte auch im Fall der Erfindung, bei der die aktive Justage vorteilhafterweise nur parallel und nicht auch vertikal zur Trägerfläche des Substrats vorzunehmen ist, und die ein Spiel der Faser in der grabenartigen Vertiefung nicht nur vertikal, sondern auch parallel zur Trägerfläche voraussetzt, ganz vermieden werden.

Die im Anspruch 3 angegebene Ausführungsform der Erfindung ist vorteilhafterweise vollständig selbstjustierend und benötigt keine aktive Justage. Bevorzugte und vorteilhafte Ausgestaltungen dieser Ausführungsform sind in den Ansprüchen 4 bis 6 angegeben.

Es sei darauf hingewiesen, daß bei der Ausgestaltung nach Anspruch 6 die beiden einander zugekehrten Randkanten der planen Flächen des Substrats gewissermaßen die Öffnung der grabenartigen Vertiefung in der Trägerfläche des Substrats definieren, durch welche die Faser in die Vertiefung eingebracht wird. Diese spezielle Öffnung läßt in Richtung parallel zur Trägerfläche und senkrecht zur Längsachse des Wellenleiters kein Spiel der Faser zu. Wohl aber muß die grabenartige Vertiefung vertikal zur Trägerfläche ein Spiel in Bezug auf die in die Vertiefung eingebrachte Faser derart bereitzustellen, daß die Faser ohne Hemmnis bis zur Auflage der planen Flächen des Halteteils auf den planen Flächen des Substrats in die nicht genau bemessene Vertiefung eingebracht werden kann.

Spiel im Sinne der Erfindung bedeutet zumindest Spiel in Richtung vertikal zur Trägerfläche, umfaßt aber auch Spiel sowohl in Richtung vertikal als auch in Richtung parallel zur Trägerfläche.

Bei der selbstjustierenden Ausführungsform nach Anspruch 3 und deren Ausgestaltung nach den Ansprüchen 4 bis 6 sind nicht die grabenartige Vertiefung in der Trägerfläche des Substrats, sondern die planen Flächen des Substrats und Halteteils und die Zentriervorrichtung genau in Bezug auf die Längsachse von Wellenleiter und Faser zu justieren. Dies ist aus herstellungstechnischer Sicht vorteilhaft.

Eine bevorzugte Ausführungsform der erfindungsgemäßen Anordnung, die sich auf das Halteteil bezieht, ist im Anspruch 7 angegeben. Bevorzugte und vorteilhafte Ausgestaltungen dieser Ausführungsform nach Anspruch 7 sind in den Ansprüchen 8 und 9 angegeben.

Ein in Bezug auf Herstellung und Justierung besonders günstiges Verfahren zur Herstellung eines insbesondere für eine erfindungsgemäße Anordnung geeigneten Substratteils ist im Anspruch 10 angegeben. Dieses Verfahren hat den Vorteil, daß die planen Flächen des Substrats, zwischen denen die grabenartige Vertiefung angeordnet ist, im wesentlichen selbstjustierend in ihrer Lage vertikal zur Trägerfläche des Substrats sehr genau in Bezug auf die Längsachse des planaren Wellenleiters auf einfache Weise hergestellt werden können, und daß auf ähnlich einfache Weise eine Zentriervorrichtung hergestellt werden kann, mit der die Längsachse der Faser in Richtung parallel zur Trägerfläche des Substrats sehr genau auf die Längsachse des planaren Wellenleiters einjustiert wird.

Bevorzugte und vorteilhafte Ausgestaltungen dieses Verfahrens gehen aus den Ansprüchen 11 bis 14 hervor.

Die Erfindung wird in der nachfolgenden Beschreibung anhand der Figuren beispielhaft näher erläutert. Es zeigen:

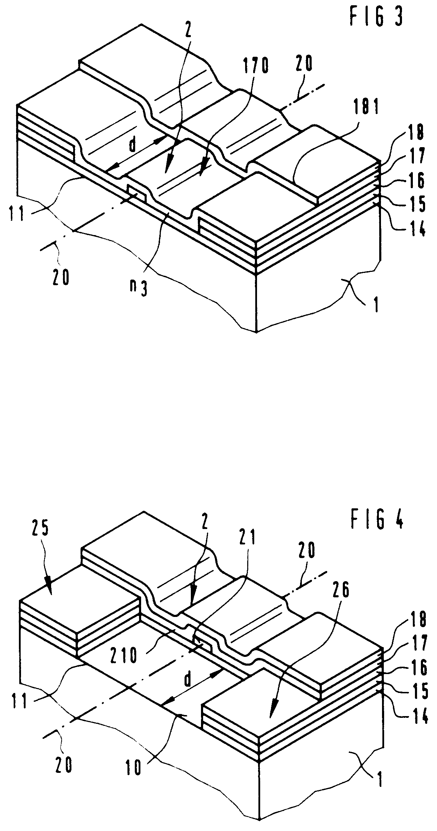

- Figuren 1 bis 5: in perspektivischer Darstellung einen Ausgangskörper, drei nach verschiedenen Verfahrensstufen erhaltene Körper und den nach einer Verfahrensendstufe erhaltenen Körper eines Verfahrens zur Herstellung eines Substratteils für eine erfindungsgemäße Anordnung, und
- Figur 6: in perspektivischer Darstellung ein Halteteil mit einer darauf befestigten Faser zur Herstellung der erfindungsgemäßen Anordnung mit dem Substratteil nach Figur 5.

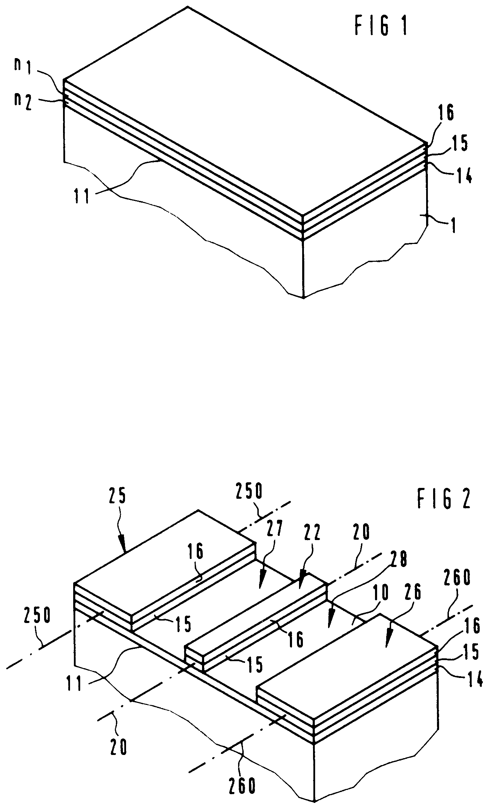

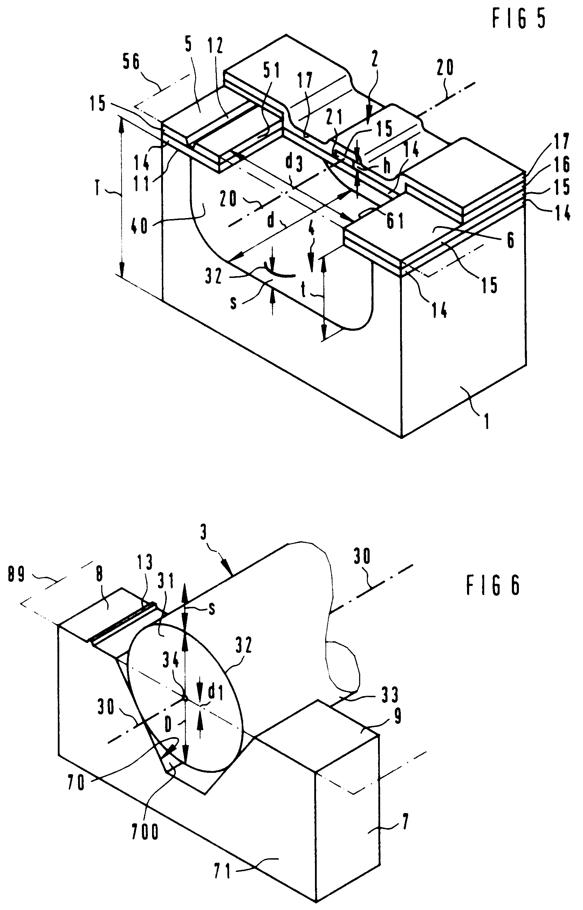

Das beispielhafte Verfahren zur Herstellung des Substratteils für die beispielhafte erfindungsgemäße Anordnung geht von dem Ausgangskörper nach Figur 1 aus. Dieser Ausgangskörper besteht aus einem Substrat 1 aus Si mit einer die Trägerfläche 10 (siehe Figur 4) des Substrats 1 bildenden und durch eine geradlinig verlaufende Randkante 11 begrenzten Oberfläche. Auf der Trägerfläche 10 ist ganzflächig eine erste Schicht aus SiO₂, das mit B₂O₃ dotiert ist und eine erste Brechzahl n₁ aufweist, aufgebracht. Die erste Schicht 14 ist ganzflächig mit einer zweiten Schicht 15 aus SiO₂, das mit B₂O₃ und TiO₂ dotiert ist und eine Brechzahl n₂ > n₁ aufweist, bedeckt. Die zweite Schicht 15 ist ganzflächig mit einer Maskenschicht 16 aus vorzugsweise amorphem Si bedeckt.

Aus dem aus den drei Schichten 14, 15 und 16 bestehenden Schichtenstapel werden die drei in Figur 2 gezeigten erhabenen Stege 25, 22 und 26 auf der ersten Schicht 14 geätzt, die durch grabenartige Vertiefungen 27 und 28 voneinander getrennt sind, sich bis zur Randkante 11 des Substrats 1 erstrecken und Längsachsen 250, 20 bzw. 260 aufweisen, die senkrecht zur Randkante 11 sind. Diese Längsachsen sind beispielsweise durch zentrale Längsachsen der streifenförmigen Teile der zweiten Schicht 15 in den Stegen 25, 22 und 26 definiert.

Die drei Stege 25, 22 und 26 werden beispielsweise so hergestellt, daß zunächst die eine Hartmaske bildende Maskenschicht 16 aus amorphem Si lokal über den später zu erzeugenden Vertiefungen 27 und 28 mit einem Ätzmittel, das nur das amorphe Si, nicht aber das Material der Schichten 15 und 16 angreift, vorzugsweise anisotrop geätzt wird. Geeignet dafür ist reaktives Ionenätzen (RIE) mit HBr als Ätzmittel.

In dem von der Maskenschicht 16 befreiten Bereich wird die zweite Schicht 15 bis zur Oberfläche der ersten Schicht 14 mit einem Ätzmittel, welches das Material der zweiten Schicht 15, nicht aber das amorphe Si angreift, vorzugsweise anisotrop abgeätzt, so daß die Vertiefungen 27 und 28 entstehen, welche die Stege 25, 22 und 26 voneinander trennen. Geeignet dafür ist reaktives Ionenätzen mit CHF₃ als Ätzmittel.

Vom mittleren Streifen 22, nicht aber von den flankierenden äußeren Streifen 25 und 26 wird der verbliebene streifenförmige Teil der Maskenschicht 16 aus dem amorphen Si entfernt, beispielsweise mit einem Ätzmittel, das nur auf die Maskenschicht 16 des mittleren Steges 22 einwirkt und nur das amorphe Si, nicht aber das Material der ersten und zweiten Schicht 14 und 15 angreift.

Nach diesem Verfahrensschritt entsteht auf der Oberfläche der ersten Schicht 14 eine nicht explizit dargestellte Struktur, die aus den beiden erhabenen, aus der zweiten Schicht 15 und der einen Maskenschicht 16 bestehenden Stegen 25 und 26 und aus einem mittleren erhabenen, nur aus der streifenförmigen zweiten Schicht 15 bestehenden Steg mit der zentralen Längsachse 20 besteht.

Diese Struktur wird ganzflächig mit einer dritten Schicht 17 aus SiO₂, das mit B₂O₃ dotiert ist und eine Brechzahl n₃ < n₂, vorzugsweise n₃ = n₁, aufweist, bedeckt.

Die vom Material der ersten und dritten Schicht 14 und 17 umgebene streifenförmige zweite Schicht 15 mit der zentralen Längsachse 20 bildet den planaren Wellenleiter 2 mit der definierten Längsachse, wobei die streifenförmige zweite Schicht 15 den lichtfuhrenden Kern dieses Wellenleiters 2 bildet.

Die dritte Schicht 17 wird teilweise mit einer weiteren Maskenschicht 18 aus vorzugsweise amorphem Si derart abgedeckt, daß zwischen der Randkante 11 des Substrats 1 und einer in einem Abstand von dieser Randkante 11 angeordneten und zu dieser Randkante 11 parallelen Randkante 181 der weiteren Maskenschicht 18 ein Bereich 170 der dritten Schicht 17 von der weiteren Maskenschicht 18 freibleibt, wobei der Abstand der Randkante 181 der weiteren Maskenschicht 18 von der Randkante 11 des Substrats 1 im wesentlichen gleich dem bestimmten Abstand d der zu erzeugenden Stirnfläche 21 (siehe Figur 4) des planaren Wellenleiters 2 von der Randkante 11 des Substrats 1 gewählt wird.

In dem von der weiteren Maskenschicht 18 freien Bereich 170 der dritten Schicht 17 wird diese dritte Schicht 17 mit einem Ätzmittel, welches das Material der dritten Schicht 17, nicht aber das amorphe Si der weiteren Maskenschicht 18 angreift, vorzugsweise anisotrop abgeätzt und dann zwischen den beiden freiwerdenden Teilbereichen der streifenförmigen Teile der einen Maskenschicht 16 auf den erhabenen Stegen 25 und 26 die streifenförmige zweite Schicht 15 und die erste Schicht 14 bis auf die Trägerfläche 10 des Substrats 1 mit einem oder mehreren Ätzmitteln, welche das Material der zweiten und dritten Schicht 15 und 16, nicht aber das amorphe Si der einen Maskenschicht 16 und weiteren Maskenschicht 18 angreift, vorzugsweise anisotrop abgeätzt. Zum Abätzen der dritten, zweiten und ersten Schicht 17, 15 und 14 eignet sich reaktives Ionenätzen mit CHF₃ als Ätzmittel.

Nach diesem Verfahrensschritt ist der in Figur 4 gezeigte Körper mit einer freiliegenden und aufgrund des anisotropen Ätzens im wesentlichen vertikal zur Trägerfläche 10 des Substrats 1 stehenden Fläche 210, welche die Stirnfläche 21 des planaren Wellenleiters 2 enthält und die im Abstand d von der Randkante 11 des Substrats 1 und parallel zu dieser Randkante angeordnet ist, entstanden.

Beim selektiven Abätzen der ersten, zweiten und dritten Schicht 14, 15 und 17 im letztgenannten Verfahrensschritt kann auch isotropes Ätzen mit Flußsäure verwendet werden, wenn auf ein gleichzeitiges Herstellen der zur Trägerfläche 10 des Substrats 1 senkrechten Fläche 210, in welcher die Stirnfläche 21 des planaren Wellenleiters 2 liegt, verzichtet wird und diese Fläche 210 anderweitig, beispielsweise durch einen Sägeschnitt hergestellt wird.

In die vor der Fläche 210 mit der Stirnfläche 21 des planaren Wellenleiters 2 freiliegende Trägerfläche 10 des Substrats 1 aus Si wird die grabenartige Vertiefung 4 mit einem Ätzmittel geätzt, welches nur das Si, nicht aber das Material der ersten, zweiten und dritten Schicht 14, 15 und 17 angreift, geätzt, wobei auch die eine und weitere Maskenschicht 16 und 18 aus dem amorphen Si entfernt werden. Als Ätzmittel eignet sich SF₆ im Plasma oder KOH-Lösung. Die erste und zweite Schicht 14 und 15 dienen bei dieser Ätzung als Maske.

Nach diesem die Verfahrensendstufe bildenden Verfahrensschritt ist der in Figur 5 dargestellte Endkörper entstanden, der als Substratteil für eine erfindungsgemäße Anordnung dienen kann.

Die Vertiefung 4 ist nach Größe und Form so zu wählen, daß die in der Vertiefung 4 angeordnete Faser 3 die Innenwand 40 der Vertiefung 4 nicht berührt, wenn die Längsachse 30 der Faser 3 in der Vertiefung 4 und die Längsachse 20 des planaren Wellenleiters 2 fluchten. Bei einem Ausführungsbeispiel hat die Vertiefung 4 eine von der Tragerfläche 10 des Substrats 1 aus gemessene Tiefe t von 60 µm bei einer Substratdicke T von 500 µm.

Die in der gemeinsamen Ebene 56 liegenden planen Flächen 5 und 6 des Substrats 1 sind durch die freiliegende Oberfläche der zweiten Schicht 15 definiert. Diese sind in Richtung vertikal zur Trägerfläche 10 des Substrats 1 sehr genau in Bezug auf die Längsachse 20 des planaren Wellenleiters 2 definiert, da dessen Kern aus einem streifenartigen Teil der gleichen zweiten Schicht 15 besteht, die auf der definierten Oberfläche der ersten Schicht 14 liegt. Die Höhe h der Längsachse 20 des planaren Wellenleiters 2 in Bezug auf die gemeinsame Ebene 56 der beiden planen Flächen 5 und 6 des Substrats 1 ist beim Beispiel nach Figur 5 im wesentlichen gleich der halben Dicke der zweiten Schicht 15. Die Längsachse 20 liegt dabei unterhalb der gemeinsamen Ebene 56 der planen Flächen 5 und 6 des Substrats 1.

Die einander zugekehrten und parallel zur Längsachse 20 des planaren Wellenleiters 2 verlaufenden Randkanten 51 und 61 der planen Flächen 5 und 6 des Substrats 1 sind symmetrisch zu dieser Längsachse 20 und in einem Abstand d₃ voneinander angeordnet, der so bemessen sein muß, daß die Faser so weit in die Vertiefung einbringbar ist, daß die Längsachse 30 der Faser 3 und die Längsachse 20 des Wellenleiters 2 miteinander fluchten. In dieser Lage hat der Mantel 33 der Faser 3 und die Umfangslinie 32 der Stirnfläche 31 der Faser 3 einen Abstand bzw. ein Spiel s vom Boden der Vertiefung 4.

Wenn der Abstand d₃ der einander zugekehrten Randkanten 51 und 61 der planen Flächen 5 und 6 des Substrats gleich dem Durchmesser der Faser 3 gewählt ist, den diese in der gemeinsamen Ebene 56 der planen Flächen 5 und 6 des Substrats 1 hat, wenn die Längsachse 20 des planaren Wellenleiters 2 und die Längsachse 30 der Faser 3 fluchten, und wenn die Längsachse 20 des planaren Wellenleiters 2 genau in der Mitte zwischen den beiden Randkanten 51 und 61 liegt, bilden die Randkanten 51 und 61 eine Ausrichtungs- und Zentriereinrichtung zum automatischen Zentrieren der Faser 3 bezüglich des planaren Wellenleiter 2 in Richtung parallel zur Ebene 56 und senkrecht zur Längsachse 20 des Wellenleiters 2. Beim Beispiel nach der Figur 5 ist die Höhe h der Längsachse 20 des planaren Wellenleiters 2 in Bezug auf die gemeinsame Ebene 56 der beiden planaren Flächen 5 und 6 des Substrats 1 sehr klein. In diesem Fall kann der Abstand d₃ der Randkanten 51 und 61 gleich dem Durchmesser D der Faser gewählt werden, wenn diese Randkanten als Ausrichtungs- und Zentriereinrichtung zum Ausrichten und Zentrieren der Längsachse 30 der Faser 3 und der Längsachse 20 des planaren Wellenleiters 2 aufeinander wirken soll.

Wird die Vertiefung 4 durch Ätzung mit einer KOH-Lösung hergestellt, ergibt sich abweichend von der Darstellung nach Figur 5 eine Vertiefung 4 in Form einer V-förmigen Nut, sofern ein (100)-Si-Wafer als Substrat 1 verwendet wird. Diese V-förmige Nut muß im Querschnitt so groß gemacht werden, daß die auf den Wellenleiter 2 zentrierte Faser 3, deren Kern mit 34 bezeichnet ist, die Wand dieser Nut nicht berührt.

Die Ausrichtung und Zentrierung der Faser 3 auf den planaren Wellenleiter 2 in Richtung vertikal zur Trägerfläche 10 des Substrats bzw. zur gemeinsamen Ebene 56 der planen Flächen 5 und 6 des Substrats 1 erfolgt mit Hilfe des Halteteils 7, auf dem die Faser 3 befestigt ist. Dieses Halteteil 7 weist zwei in einer gemeinsamen Ebene 89 liegende plane Flächen 8 und 9 auf, zwischen denen die Faser 3 so festigt ist, daß die Längsachse 30 der Faser 3 parallel zur gemeinsamen Ebene 89 ist. Der vertikale Abstand d₁ der Längsachse 30 der Faser 3 von der gemeinsamen Ebene 89 ist betragsmäßig gleich der Höhe h zu wählen, in der die Längsachse 20 des planaren Wellenleiters 2 in Bezug auf die gemeinsame Ebene 56 der planen Flächen 5 und 6 des Substrats 1 angeordnet ist.

Die Lage der Längsachse 30 der Faser 3 in Bezug auf die gemeinsame Ebene 89 der planen Flächen 8 und 9 des Halteteils 7 wird vorzugsweise durch die genaue Ätzung einer V-förmigen Nut 70 in eine polierte (100)-Si-Scheibe festgelegt. Dabei werden die bekannten, kristallrichtungsabhängigen Ätzraten des Si ausgenutzt, wie sie aus K.E. Petersen, Proc. IEEE, 70, 420-457 (1982) bekannt sind. Die Faser 3 wird in dieser Nut 70 so angeordnet, daß sie an deren Innenwand 700 anliegt, und dann eingeklebt oder kalt oder heiß gelötet. Die Stirnfläche 31 der Faser 3 und die Stirnfläche 71 des Halteteils 7 können durch Sägen und Polieren hergestellt werden.

Das Halteteil 7 wird mit seinen planen Flächen 8 und 9 so auf die planen Flächen 5 und 6 des Substrats 1 aufgelegt, daß die plane Fläche 8 des Halteteils 7 auf der planen Fläche 5 des Substrats 1 und die plane Fläche 9 des Halteteils 7 auf der planen Fläche 6 des Substrats 1 aufliegt und die Stirnfläche 31 der dazwischenliegenden Faser 3 der Stirnfläche 21 des planaren Wellenleiters 2 zugekehrt ist bzw. gegenüberliegt.

Bei dem derart auf dem Substrat 1 aufliegenden Halteteil 7 liegt die Längsachse 30 der Faser 3 automatisch in Höhe der Längsachse 20 des planaren Wellenleiters 2 und es ist nur noch eine laterale Justierung vorzunehmen, wenn nicht eine Ausrichtungs- und Zentriereinrichtung vorgesehen ist, mit der die Längsachse 30 der Faser 3 automatisch in Richtung parallel zur Längsachse 20 des Wellenleiters 2 sowie genau in Richtung zu dieser Längsachse 20 eingestellt wird. Ein Beispiel einer solchen Ausrichtungs- und Zentriereinrichtung ist oben bereits beschrieben worden.

Alternativ dazu oder zusätzlich kann eine Ausrichtungs- und Zentriereinrichtung vorgesehen sein, die zumindest einen Zentrierrücksprung und einen Zentriervorsprung aufweist, die auf aufeinanderliegenden planen Flächen 5 und 8 und/oder 6 und 9 des Substrats 1 und Halteteils 7 ausgebildet sind und derart ineinanderpassen, daß sie in Richtung parallel zu diesen aufeinanderliegenden planen Flächen 5 und 8 und/oder 6 und 9 und in Richtung senkrecht zur Längsachse 20 des Wellenleiters 2 aneinandergrenzen, wobei in diesem Zustand die Längsachsen 20 und 30 von Wellenleiter 2 und Faser 3 fluchten. Vorzugsweise besteht der Zentrierrücksprung aus einer in Richtung der Längsachse 20 des Wellenleiters 2 langgestreckten Nut und der Zentriervorsprung aus einem in dieser Richtung langgestreckten Steg. In der Figur 5 ist beispielsweise eine solche Nut in der planen Fläche 5 des Substrats 1 vorgesehen und mit 12 bezeichnet, während der dazugehörende Steg auf der planen Fläche 8 des Halteteils 7 vorgesehen und mit 13 bezeichnet ist. Es kann auch umgekehrt sein. Alternativ oder zusätzlich können auch auf den planen Flächen 6 und 9 des Substrats 1 und Halteteils 7 eine solche Nut und ein solcher Steg vorgesehen sein.

Zur Herstellung einer Nut 12 kann beim Ätzen der einen Maskenschicht 16 zur Herstellung der Stege 25, 22 und 26 nach Figur 2 in dem Bereich dieser Maskenschicht 16 über dem Steg 25 und/oder 26 ein zusätzlicher streifenförmiger geätzter Bereich erzeugt werden, unter dem beim Ätzen der zweiten Schicht 15 die Nut 12 in dieser Schicht 15 entsteht. Der oder die zugehörigen Stege 13 müssen dann auf dem Halteteil 7 erzeugt werden. Diese Art der Ausrichtungs- und Zentriereinrichtung mit dem Zentrierrücksprung und -vorsprung hat den Vorteil, daß der Abstand d₃ der einander zugekehrten Randkanten 51 und 61 der planen Flächen 5 und 6 größer als der Durchmesser D der Faser 3 sein kann, so daß vorteilhafterweise auch Fasern 3 ausgerichtet und zentriert werden können, deren Durchmesser kleiner oder gleich diesem Abstand d₃ ist.

Bei den beiden beschriebenen konkreten Beispielen von Ausrichtungs- und Zentriereinrichtungen wird das auf dem Substrat 1 aufliegende Halteteil 7 in Richtung der Längsachse 20 des Wellenleiters 2 zur Stirnfläche 21 dieses Wellenleiters 2 vorgeschoben und danach festgeklemmt oder permanent verklebt. Zweckmäßigerweise wird zwischen die Stirnfläche 21 des Wellenleiters 2 und die dieser Stirnfläche 21 gegenüberliegende Stirnfläche 31 der Faser 3 eine immertierende Substanz 3, z.B. ein Silikonkleber, eingebracht.

Bei dem oben beschriebenen Verfahren zur Herstellung des Substratteils nach Figur 5 wird die dritte Schicht 17 vorzugsweise durch Überschmelzen des streifenförmigen Teils der zweiten Schicht 15 und der streifenförmigen Teile der einen Maskenschicht 16 auf den Stegen 25 und 26 aufgebracht. Die eine Maskenschicht 16 muß bei dieser Art des Aufbringens der dritten Schicht aus einem hinsichtlich thermischen und chemischen Verhaltens weitgehend kompatiblen Material bestehen. Vorzugsweise wird wie bei Mat. Res. Soc. Symp. Proc. Vol. 244, 337-342 Si, beispielsweise amorphes Si, verwendet. Ansonsten können sämtliche Schichten auf dem Substrat so hergestellt werden, wie es in dieser letztgenannten Literaturstelle angegeben ist.

Die erfindungsgemäße Anordnung ist insbesondere für bidirektionale optische Sende- und Empfangsmodule geeignet.

## Patentansprüche

1. Anordnung zur optischen Kopplung eines auf einer Trägerfläche (10) eines Substrats (1) integrierten planaren optischen Wellenleiters (2) und einer optischen Faser (3),
- wobei der planare Wellenleiter (2) eine definierte, zur Trägerfläche (10) parallele zentrale Längsachse (20) und eine zu dieser Längsachse (20) im wesentlichen senkrechte Stirnfläche (21), die einer bestimmten, die Trägerfläche (10) begrenzenden Randkante (11) des Substrats (1) zugekehrt ist und sich in einem Abstand (d) von dieser Randkante (11) befindet, aufweist,
- wobei zwischen der Stirnfläche (21) des planaren Wellenleiters (2) und der Randkante (11) des Substrats (1) eine grabenförmige Vertiefung (4) in der Trägerfläche (10) des Substrats (1) ausgebildet ist, die zwischen zwei zu beiden Seiten der Längsachse (20) des planaren Wellenleiters (2) und in einer gemeinsamen Ebene (56) angeordneten planen Flächen (5, 6) verläuft und sich von der Randkante (11) des Substrats (1) in Richtung der Längsachse (20) des planaren Wellenleiters (2) bis zu dessen Stirnfläche (21) erstreckt, und in der die Faser (3) mit einer Stirnfläche (31) derart aufnehmbar ist, daß ein die Stirnfläche (31) der aufgenommenen Faser (3) der Stirnfläche (21) des planaren Wellenleiters (2) zugekehrt ist und eine definierte zentrale Längsachse (30) der aufgenommenen Faser (3) und die Längsachse (20) des planaren Wellenleiters (2) miteinander fluchten,
**dadurch gekennzeichnet,**
- daß die Faser (3) in einem separaten Halteteil (7) zwischen zwei in einer gemeinsamen Ebene (89) angeordneten planen Flächen (8,9) fixiert ist,
- daß die beiden planen Flächen (8, 9) des Halteteils (7) auf den beiden planen Flächen (5, 6) des Substrats (1) derart aufliegen, daß die Faser (3) mit ihrer der Stirnfläche (21) des planaren Wellenleiters (2) zugekehrten Stirnfläche (31) in der grabenförmigen Vertiefung (4) in der Trägerfläche (10) des Substrats (1) angeordnet ist,
- daß ein zur gemeinsamen Ebene (89) der planen Flächen (8, 9) des Halteteils (7) vertikaler Abstand (d₁) der Längsachse (30) der fixierten Faser (3) derart bemessen ist, daß diese Längsachse (30) bei dem mit seinen planen Flächen (8, 9) auf den planen Flächen (5, 6) des Substrats (1) aufliegenden Halteteil (7) in Bezug auf die gemeinsame Ebene (56) der aufeinanderliegenden planen Flächen (5, 6) im wesentlichen auf der gleichen Höhe (h) wie die Längsachse (20) des planaren Wellenleiters (2) liegt und die Faser (3) mit einem Spiel (s) in der Vertiefung (4) angeordnet ist.

2. Anordnung nach einem der vorhergehenden Ansprüche,
**dadurch gekennzeichnet,**
daß die Längsachse (20) des planaren Wellenleiters (2) in der den beiden planen Flächen (5, 6) des Substrats (1) gemeinsamen Ebene (56) angeordnet ist, daß die Längsachse (30) der Faser (3) in der den beiden planen Flächen (8, 9) des Halteteils (7) gemeinsamen Ebene (89) angeordnet ist, und daß die planen Flächen (5, 6) des Substrats (1) einander gegenüberliegenden Randkanten (51, 61) aufweisen, die parallel zur Längsachse (20) des planaren Wellenleiters (2) verlaufen und in einem Abstand (d₃) voneinander angeordnet sind, der gleich oder größer als der Außendurchmesser (D) der Faser (3) ist.

3. Anordnung nach Anspruch 1 oder 2,
**dadurch gekennzeichnet,**
daß wenigstens auf den planen Flächen (5, 6) des Substrats (1) eine Ausrichtungs- und Zentriereinrichtung (12, 13; 51, 61) zum Ausrichten und Zentrieren der Längsachse (30) der Faser (3) und der Längsachse (20) des planaren Wellenleiters (2) aufeinander vorgesehen ist.

4. Anordnung nach Anspruch 3,
**dadurch gekennzeichnet,**
daß die Ausrichtungs- und Zentriereinrichtung zumindest einen Zentrierrücksprung (12) und Zentriervorsprung (13) aufweist, die auf aufeinanderliegenden planen Flächen (5, 8) des Substrats (1) und Halteteils (7) ausgebildet sind und derart ineinanderpassen, daß sie in Richtung parallel zu diesen aufeinanderliegenden planen Flächen (5, 8) und senkrecht zur Längsachse (20) des planaren Wellenleiters (2) spielfrei aneinandergrenzen.

5. Anordnung nach Anspruch 4,
**dadurch gekennzeichnet,**
daß der Justierrücksprung (12) aus einer in Richtung Längsachse (20) des planaren Wellenleiters (2) langgestreckten Nut und der Zentriervorsprung (13) aus einem in dieser Richtung langgestreckten Steg besteht.

6. Anordnung nach Anspruch 3,
**dadurch gekennzeichnet,**
daß die Ausrichtungs- und Zentriereinrichtung aus zwei einander gegenüberliegenden Randkanten (51, 61) der planen Flächen (5, 6) des Substrats (1) besteht, die parallel zur Längsachse (20) des planaren Wellenleiters (2) verlaufen und in einem Abstand (d3) angeordnet sind, der so bemessen ist, daß die Längsachse (30) der diese Randkanten (51, 61) berührenden Faser (3) mit der Längsachse (20) des planaren Wellenleiters (2) fluchtet.

7. Anordnung nach einem der vorhergehenden Ansprüche,
**dadurch gekennzeichnet,**
daß die Faser (3) in einer zwischen den in der gemeinsamen Ebene (89) angeordneten planen Flächen (8, 9) des Halteteils (7) ausgebildeten Nut (70) des Halteteils angeordnet und fixiert ist.

8. Anordnung nach Anspruch 7,
**dadurch gekennzeichnet,**
daß die Nut im Querschnitt zur Längsachse (30) der in der Nut (70) fixierten Faser V-förmig ist.

9. Anordnung nach Anspruch 8,
**dadurch gekennzeichnet,**
daß das Halteteil (7) anisotrop ätzbares Material aufweist, und daß die V-förmige Nut (70) eine durch anisotropes Ätzen erzeugte Nut ist.

10. Verfahren zur Erzeugung eines auf einer Trägerfläche (10) eines Substrats (1) integrierten planaren optischen Wellenleiters (2), der eine definierte, zur Trägerfläche (10) parallele zentrale Längsachse (20) und eine zu dieser Längsachse (20) im wesentlichen senkrechte Stirnfläche (21), die einer bestimmten, die Trägerfläche (10) begrenzenden Randkante (11) des Substrats (1) zugekehrt ist und sich in einem Abstand (1) von dieser Randkante (11) befindet, aufweist,
wobei zwischen der Stirnfläche (21) des planaren Wellenleiters (2) und der Randkante (11) des Substrats (1) eine grabenförmige Vertiefung (4) in der Trägerfläche (10) des Substrats (1) ausgebildet ist, die zwischen zwei zu beiden Seiten der Längsachse (20) des planaren Wellenleiters (2) und in einer gemeinsamen Ebene (56) angeordneten planen Flächen (5, 6) verläuft und sich von der Randkante (11) des Substrats (1) in Richtung der Längsachse (20) des planaren Wellenleiters (2) bis zu dessen Stirnfläche (21) erstreckt, insbesondere für eine Anordnung nach einem der vorhergehenden Ansprüche,
**dadurch gekennzeichnet,**
- daß ein Substrat (1) mit einer die Trägerfläche (10) bildenden und durch eine geradlinig verlaufende Randkante (11) des Substrats (1) begrenzten Oberfläche verwendet wird, auf welcher ganzflächig zumindest eine erste Schicht (14) aus einem Material einer bestimmten ersten Brechzahl (n₁) aufgebracht ist, die ganzflächig von einer zweiten Schicht (15) aus einem Material aus einer im Vergleich zur ersten Brechzahl (n₁) größeren zweiten Brechzahl (n₂) abgedeckt ist,
- daß die zweite Schicht (15) ganzflächig mit einer Maskenschicht (16) aus einem Material abgedeckt wird, das gegen ein oder mehrere bestimmte Abtragmittel, welches oder welche das Material der ersten und zweiten Schicht (14, 15) und des Substrats (1) abtragen, resistent ist,
- daß durch lokalen Abtrag zumindest der Maskenschicht (16) und der zweiten Schicht (15) wenigstens drei erhabene streifenartige Stege (25, 22, 26) auf oder über dem Substrat (1) erzeugt werden, die durch grabenartige Vertiefungen (27, 28) voneinander getrennt sind, sich bis zur Randkante (11) des Substrats (1) erstrecken und definierte, zueinander und zur Trägerfläche (10) parallele Längsachsen (250, 20,260) aufweisen, die senkrecht zu dieser Randkante (11) sind,
- daß vom mittleren Steg (22) die Maskenschicht (16) entfernt und auf den beiden äußeren Stegen (25, 26) belassen wird, daß der von der Maskenschicht (16) befreite und das Material der zweiten Schicht (15) aufweisende mittlere Steg (22) mit zumindest einer dritten Schicht (17) aus einem Material einer im Vergleich zur zweiten Brechzahl (n₂) kleineren Brechzahl (n₃) abgedeckt wird,
- daß die dritte Schicht (17) teilweise mit einer weiteren Maskenschicht (18) aus einem Material, das gegen das oder die mehreren bestimmten Abtragmittel und gegen ein das Material der dritten Schicht (17) abtragendes Tragmittel resistent ist, derart abgedeckt wird, daß zwischen der Randkante (11) des Substrats (1) und einer in einem Abstand von dieser Randkante (11) angeordneten und zu dieser Randkante (11) parallelen Randkante (181) der weiteren Maskenschicht (18) ein Bereich (170) der dritten Schicht (17) von der weiteren Maskenschicht (18) freibleibt, wobei der Abstand der Randkante (181) der weiteren Maskenschicht (18) von der Randkante (11) des Substrats (1) im wesentlichen gleich dem bestimmten Abstand (d) der Stirnfläche (21) des planaren Wellenleiters (2) von der Randkante (11) des Substrats (1) gewählt wird,
- daß mit dem oder den das Material der einen und weiteren Maskenschicht (16, 18) nicht angreifenden Abtragmitteln die dritte, zweite und erste Schicht (17, 15, 14) in dem von der einen und weiteren Maskenschicht (16, 18) freien Bereich (170) der dritten Schicht (17) im wesentlichen senkrecht zur Trägerfläche (10) des Substrats (1) abgetragen werden und
- daß in den von diesen drei Schichten (14, 15, 17) befreiten Bereich (100) der Trägerfläche (10) die grabenartige Vertiefung (4) mit einem Abtragmittel eingebracht wird, welches das Material der ersten, zweiten und dritten Schicht (14, 15, 17) nicht angreift.

11. Verfahren nach Anspruch 10,
**dadurch gekennzeichnet,**
daß die Vertiefung (4) mit einem Abtragmittel in die Trägerfläche (10) des Substrats (1) eingebracht wird, welches das Material des Substrats (1) und der einen und/oder weiteren Maskenschicht (16, 18), nicht aber das Material der ersten, zweiten und dritten Schicht (14, 15, 17) angreift.

12. Verfahren nach Anspruch 11,
**dadurch gekennzeichnet,**
- daß ein Substrat (1) aus Si, eine erste Schicht (14) aus mit B₂O₃ dotiertem SiO₂, eine zweite Schicht (15) aus mit B₂O₃ und TiO₂ dotiertem SiO₃, eine Maskenschicht (16) aus Si, eine dritte Schicht (17) aus mit B₂O₃ dotiertem SiO₂ und eine weiteren Maskenschicht (18) aus Si verwendet werden,
- daß zur Erzeugung der drei Stege (25, 22, 26) die eine Maskenschicht (16) mittels eines reaktiven Ionenätzverfahrens unter Verwendung von HB₃ selektiv und bereichsweise abgetragen und in den von der ersten Maskenschicht (16) befreiten Bereichen der zweiten Schicht (15) diese zweite Schicht (15) mittels eines reaktiven Ionenätzverfahrens unter Verwendung CHF₃ abgetragen wird,
- daß die eine Maskenschicht (16) allein vom mittleren Steg (22) und nicht von beiden äußeren Stegen (25, 26) entfernt wird,
- daß der von der einen Maskenschicht (16) befreite mittlere Steg (22) mit der dritten Schicht (17) abgedeckt wird,
- daß auf die dritte Schicht (17) die weitere Maskenschicht (18) mit ihrer Randkante (181) erzeugt wird,
- daß die dritte, zweite und erste Schicht (17, 15, 14) mittels eines reaktiven Ionenätzverfahrens, welches die eine und weiteren Maskenschicht (16, 18) nicht angreift, abgetragen werden, und
- daß die grabenartige Vertiefung (4) in der Trägerfläche (10) des Substrats (1) durch Ätzung mit SF₆ und/oder KOH erzeugt wird.

13. Verfahren nach Anspruch 11 oder 12,
**dadurch gekennzeichnet,**
daß die erste und/oder zweite Maskenschicht (16, 18) aus amorphem Si besteht.

14. Verfahren nach einem der Ansprüche 11 bis 13,
**dadurch gekennzeichnet,**
daß die Stirnfläche (21) des planaren Wellenleiters (2) durch Sägen erzeugt wird.
